# EUROPÄISCHE PATENTANMELDUNG

(11) **EP 3 467 731 A1**
(43) Veröffentlichungstag der Anmeldung: **10.04.2019**
(21) Anmeldenummer: 18197873.5
(22) Anmeldetag: 01.10.2018
(51) Int. Cl.: G06Q 10/06, G06Q 50/04

(54) **STEUERSOFTWARE, MONTAGEARBEITSPLATZ, ANORDNUNG MIT EINER MEHRZAHL VON MONTAGEARBEITSPLÄTZEN, COMPUTERLESBARES MEDIUM**

(30) Priorität: 06.10.2017 DE 102017217839
(71) Anmelder: Robert Bosch GmbH, 70442 Stuttgart (DE)
(72) Erfinder: NOWAK, Rene, 70469 Stuttgart (DE); SYED ABDUL SUBHAN, Azam Sayeed, 70806 Kornwestheim (DE); MUELLER, Manuel, 88437 Sulmingen (DE)
(74) Vertreter: Maiß, Harald

(57) **Zusammenfassung**

Offenbart ist eine Steuersoftware für einen Montagearbeitsplatz. Diese hat eine Mehrzahl von Mikrosoftwaremodulen. Die Mikrosoftwaremodule übernehmen hierbei eine Vielzahl von Aufgaben des Montagearbeitsplatzes. Über ein Mikrosoftwaremodul in Form eines graphischen Benutzeroberflächenmoduls kann eine Benutzeroberfläche auf einer Ausgabevorrichtung eines Montagearbeitsplatzes dargestellt werden. Über die Benutzeroberfläche und das Benutzeroberflächenmodul kann dann zumindest auf einem Teil der weiteren Mikrosoftwaremodule zugegriffen werden.

## Beschreibung

### Gebiet der Erfindung

Die Erfindung betrifft eine Steuersoftware für einen Montagearbeitsplatz. Des Weiteren betrifft die Erfindung einen Montagearbeitsplatz und eine Anordnung mit einer Mehrzahl von Montagearbeitsplätzen. Außerdem ist ein computerlesbares Medium vorgesehen.

### Hintergrund der Erfindung

Aus der DE 10 2013 270 107 A1 ist ein Montagearbeitsplatz bekannt. Bei diesem sind manuelle Montage- und/oder Kommissionierungsprozesse von einem Benutzer ausführbar. Der Montagearbeitsplatz hat eine Arbeitsfläche mit mehreren Behältern für Bauteile. Des Weiteren weist der Arbeitsplatz einen Beamer, einen Tiefenbildsensor und einen Bildschirm auf.

### Offenbarung der Erfindung

Demgegenüber liegt der Erfindung die Aufgabe zugrunde, eine Steuersoftware zu schaffen, mit der ein Montagearbeitsplatz effizient und einfach steuerbar ist. Des Weiteren liegt der Erfindung die Aufgabe zugrunde einen Montagearbeitsplatz zu schaffen, der kostengünstig ist und einfach und effizient steuerbar ist. Außerdem soll eine Anordnung von Montagearbeitsplätzen geschaffen werden, die kostengünstig ausgestaltet sind und effizient steuerbar sind. Des Weiteren ist vorgesehen ein computerlesbares Medium mit der Steuersoftware vorzusehen.

Die Aufgabe der Erfindung hinsichtlich der Steuersoftware wird gelöst gemäß den Merkmalen des Anspruchs 1, hinsichtlich des Montagearbeitsplatzes gemäß den Merkmalen des Anspruchs 7, hinsichtlich der Anordnung gemäß den Merkmalen des Anspruchs 10 und hinsichtlich des computerlesbaren Mediums gemäß den Merkmalen des Anspruchs 12.

Vorteilhafte Weiterbildungen der Erfindung sind Gegenstand der Unteransprüche.

Erfindungsgemäß ist eine Steuersoftware für einen Montagearbeitsplatz vorgesehen. Diese ist durch eine Mehrzahl von Mikrosoftwaremodulen oder Mikroservices gebildet. Diese können beispielsweise auf einer gemeinsamen elektronischen Datenverarbeitungsanlage (EDV-Anlage) oder jeweils auf einer EDV-Anlage ausgeführt sein oder Gruppen bilden, die jeweils auf einer EDV-Anlage ausgeführt sind. Vorzugsweise sind die Mikrosoftwaremodule als separate, insbesondere unabhängige, Prozesse ausgebildet. Der Montagearbeitsplatz kann vorzugsweise zumindest ein elektronisches Gerät aufweisen. Beispielsweise ist als Gerät eine Ausgabevorrichtung für Bildinformationen, wie beispielsweise ein Bildschirm und/oder ein Projektor, vorgesehen. Als Mikrosoftwaremodul ist vorteilhafterweise ein grafisches Benutzeroberflächenmodul oder ein Frontend Graphical User Interface (GUI) Service für die Ausgabevorrichtung und/oder für eine andere Ausgabevorrichtung vorgesehen. Alternativ oder zusätzlich kann als Mikrosoftwaremodul ein Schnittstellenmodul oder eine Softwareschnittstelle oder ein Working Logic ausgebildet sein. Mit diesem kann dann vorteilhafterweise eine Schnittstelle zwischen dem zumindest einen Gerät oder zumindest einem Teil der Geräte oder aller Geräte und zumindest einem weiteren Mikrosoftwaremodul oder einem Teil der weiteren Mikrosoftwaremodule oder aller Mikrosoftwaremodule bereitgestellt werden. Des Weiteren kann alternativ oder zusätzlich als Mikrosoftwaremodul ein Benutzermanagementmodul oder Usermanagementservice vorgesehen sein. Mit diesem kann insbesondere eine Liste von Benutzern des Montagearbeitsplatzes und/oder eine Liste von Benutzergruppen verwaltet sein. Des Weiteren kann alternativ oder zusätzlich als Mikrosoftwaremodul ein Montagemodul oder ein Assembly Service vorgesehen sein. Mit diesem kann dann beispielsweise eine Liste von Arbeitsplänen verwaltet werden, die jeweils einen oder mehrere Arbeitsschritt/e aufweisen und/oder mit dem eine Liste von Arbeitsschritten verwaltet ist. Des Weiteren kann alternativ oder zusätzlich als Mikrosoftwaremodul ein Auftragsverfolgungsmodul oder ein Order-Tracking Service vorgesehen sein, mit dem ein Auftrag oder eine Liste von Aufträgen für den Montagearbeitsplatz verwaltet ist. Des Weiteren kann alternativ oder zusätzlich als Mikrosoftwaremodul ein Datenmodul vorgesehen sein, mit dem Daten des Geräts oder der Geräte erfassbar und/oder auswertbar sind. Alternativ oder zusätzlich kann als Mikrosoftwaremodul ein Vorrichtungsmanagementmodul vorgesehen sein, mit dem Daten bezüglich der Ausgestaltung des Montagearbeitsplatzes verwaltet sind. Bei der Ausgestaltung kann es sich beispielsweise um, insbesondere physische, Werkzeuge und/oder Materialien und/oder um virtuelle Eigenschaften, wie Marker und/oder Projektionsboxen, handeln.

Mit den Mikrosoftwaremodulen oder Microservices ist ein Architekturmuster geschaffen, mit dem komplexe Anwendungssoftware durch kleine, unabhängige Prozesse ausgebildet ist. Die Prozesse können parallel bzw. quasiparallel (im Sinne von Multitasking) von der EDV-Anlage bzw. den EDV-Anlagen ausgeführt werden. Die einzelnen Prozesse haben vorzugsweise jeweils einen eigenen Programmcode, wobei die verschiedenen Programmcodes in unterschiedlichen Programmiersprachen erstellt sein können. Die Prozesse können beispielsweise untereinander mit sprachunabhängigen Programmierschnittstellen kommunizieren. Weist ein Montagearbeitsplatz ein Mikrosoftwaremodul oder mehrere dieser Mikrosoftwaremodule auf, so kann dieser äußerst effizient eingesetzt werden, da die Vielzahl von Aufgaben, die bei einem Montagearbeitsplatz anfallen effektiv und flexibel mit einem Mikrosoftwaremodul übernommen werden können oder auf verschiedene Mikrosoftwaremodule aufgeteilt werden können. Das Mikrosoftwaremodul oder ein jeweiliges Mikrosoftwaremodul kann dann für eine spezielle Aufgabe effizient eingesetzt werden. Ein Montagearbeitsplatz kann dann beispielsweise auch je nach Bedarf und Kundenwunsch unterschiedliche Mikrosoftwaremodule aufweisen. Die Mikrosoftwaremodule können auch zumindest weitestgehend unabhängig voneinander weiterentwickelt und an einen Montagearbeitsplatz angepasst werden. Mit anderen Worten ist die Mikrosoftwaremodularchitektur durch multiple Module oder Services gebildet, die in sogenannten "Docker Containers" laufen. Jedes Mikrosoftwaremodul hat seine eigenen Aufgaben. Alle Mikrosoftwaremodule zusammen können dann die Steuersoftware bilden. Hierdurch ist eine äußerst einfache Softwarearchitektur geschaffen, die einfach gepflegt werden kann. Sie ist äußerst sicher und einfach erweiterbar oder skalierbar. Die einzelnen Mikrosoftwaremodule können für die unterschiedlichsten Montagearbeitsplätze eingesetzt werden und auch einzeln verkauft werden. Das Benutzeroberflächenmodul kann beispielsweise von einer beliebigen Stelle in einem Netzwerk und/oder vom Montagearbeitsplatz aufgerufen werden, beispielsweise über das Gerät in Form der Ausgabevorrichtung. Benutzeroberflächenmodul muss somit nicht zwangsläufig über die Ausgabevorrichtung des Montagearbeitsplatzes ausgebildet werden. Befindet sich beispielsweise ein Rechner oder PC im gleichen Netzwerk, wie der Montagearbeitsplatz, so kann er die gleiche Darstellung, wie bei der Ausgabevorrichtung des Montagearbeitsplatzes, angezeigt bekommen, was äußerst vorteilhaft ist, da flexibel auf die Module zugreifbar ist.

In weiterer Ausgestaltung der Erfindung kann das Benutzeroberflächenmodul für zumindest einen Teil der Mikrosoftwaremodule oder für alle Mikrosoftwaremodule eine Benutzeroberfläche darstellen. Diese Lösung hat den Vorteil, dass Nutzer des Montagearbeitsplatzes oder Monteure nur mit einer Schnittstelle arbeiten können. Zumindest ein Teil der Mikrosoftwaremodule oder ein jeweiliges Mikrosoftwaremodul kann hierbei ein Benutzeroberflächenelement aufweisen, das über die Benutzeroberfläche des Benutzeroberflächenmoduls darstellbar ist. Mit anderen Worten kann das Benutzeroberflächenmodul die Benutzeroberflächen der Mikrosoftwaremodule oder eines Teils der Mikrosoftwaremodule sammeln und auf eine gemeinsame Benutzeroberfläche ausbilden, um für einen Monteur einen einfachen Zugriff auf die unterschiedlichsten Funktionalitäten des Montagearbeitsplatzes zu ermöglichen.

In weiterer Ausgestaltung der Erfindung kann das Benutzeroberflächenmodul mit zumindest einem Teil der Mikrosoftwaremodule oder mit allen Mikrosoftwaremodulen direkt kommunizieren und/oder direkt verbunden sein. Mit anderen Worten kann das Benutzeroberflächenmodul das Herz der Steuersoftware bilden.

In weiterer Ausgestaltung der Erfindung kann als Mikrosoftwaremodul ein Lizenzvalidierungsmodul oder License Validation Service vorgesehen sein, mit dem Lizenzen verwaltet werden können. Des Weiteren ist denkbar, dass alternativ oder zusätzlich als Mikrosoftwaremodul ein Aktualisierungsmodul oder ein Update Distribution Service vorgesehen ist, das zur Aktualisierung der Mikrosoftwaremodule und/oder der Lizenzen eingesetzt werden kann. Vorzugsweise ist alternativ oder zusätzlich als Mikrosoftwaremodul ein Vorrichtungsmanagementmodul oder Device Management Service vorgesehen, mit dem vorteilhafterweise Daten bezüglich der Ausgestaltung des Montagearbeitsplatzes verwaltet werden können.

Bei der bevorzugten Ausgestaltung der Erfindung können die Mikrosoftwaremodule vorrichtungstechnisch einfach mit einem einheitlichen Datentransferprotokoll kommunizieren. Vorzugsweise findet neben dem Datentransferprotokoll keine Datenübertragung zwischen den Mikrosoftwaremodulen statt. Als Datentransferprotokoll kann beispielsweise das Representational State Transfer (REST) eingesetzt sein. Ein mit dem Datentransferprotokol übertragener Dateityp kann beispielsweise JavaScript Object Notation (JSON) sein. Insbesondere soll dabei die sogenannte Zustandslosigkeit berücksichtigt werden, bei der in der Client-Server-Kommunikation eine Begrenzung stattfindet, in dem kein Client Context auf einem Server zwischen Anfragen gespeichert ist. Vorzugsweise wird das Datentransferprotokoll über ein Computernetzwerk eingesetzt.

In weiterer Ausgestaltung der Erfindung weist/weisen zumindest ein Teil der Mikrosoftwaremodule oder alle Mikrosoftwaremodule eine eigene oder jeweils eine eigene Datenbank auf, über die es/sie Daten speichern können, die für ihre jeweiligen Aufgaben notwendig sind.

Des Weiteren ist denkbar, dass zumindest ein Teil der Mikrosoftwaremodule oder alle Mikrosoftwaremodule eine webbasierte Benutzeroberfläche oder Graphical User Interface (GUI) aufweisen. Diese können dann vorzugsweise über die Benutzeroberfläche des Benutzeroberflächenmoduls, beispielsweise auf der Ausgabevorrichtung, dargestellt werden.

Das Benutzeroberflächenmodul stellt vorteilhafterweise benötigte Informationen für die Mikrosoftwaremodule auf der Ausgabevorrichtung dar. Die Informationen werden vorzugsweise in einem Web-Browser dargestellt. Hierdurch kann vorteilhafterweise das Benutzeroberflächenmodul zumindest hauptsächlich oder im Wesentlichen als Webserver dienen, der dynamische Webseiten generiert, die auf Informationen basieren, welche von den anderen Mikroservicemodulen verarbeitet und zur Verfügung gestellt werden. Die relevanten Informationen werden beispielsweise von den anderen Mikrosoftwaremodulen jedes Mal dann zur Verfügung gestellt, wenn eine dynamische Webseite generiert wird, was auf dem REST-Prinzip basieren kann. Das Benutzeroberflächenmodul wird insbesondere für das Lizenzvalidierungsmodul und/oder für das Benutzermanagementmodul und/oder für das Vorrichtungsmanagementmodul und/oder für das Auftragsverfolgungsmodul und/oder für das Montagemodul und/oder für das Datenmodul und/oder für das Vorrichtungsmanagementmodul eingesetzt. Das Benutzeroberflächenmodul kann beispielsweise bei einem Teil der Mikrosoftwaremodule oder bei allen Mikrosoftwaremodulen die entsprechende Programmierschnittstelle aufrufen, die beim entsprechenden Mikrosoftwaremodul freigelegt sein kann. In Abhängigkeit von, insbesondere über das Benutzermanagementmodul, vorgesehenen Freigaben und/oder Gruppen können Bediener oder Monteure des Montagearbeitsplatzes beispielsweise nur bestimmte Benutzeroberflächenelemente und/oder Widgets und/oder Funktionalitäten sehen, die entsprechend freigegeben und/oder der Gruppe zugeordnet sind. Beispielsweise soll ein Monteur nicht die gleichen Rechte oder Funktionalitäten wie ein Administrator haben.

In weiterer Ausgestaltung der Erfindung kann das Schnittstellenmodul eine Basisschnittstelle zur Hardware des Montagearbeitsplatzes darstellen. Die Hardware des Montagearbeitsplatzes kann beispielsweise eine oder mehrere der folgenden Komponenten aufweisen: Computerbildschirm, Projektor oder Beamer, optische Kamera, Tiefenbildsensor, eine oder mehrere Lichtquellen für einen oder mehrere Materialbehälter, Lesegerät für einen Barcode und/oder für RFID und/oder für eine Karte, Elektroschrauber, Hand-Verfolgungs-Einrichtung, Einrichtung für eine Gesten- und/oder Körpersteuerung, Pick-to-Light-Module, speicherprogrammierbare Steuerung oder SPS, sonstige Ein- und Ausgänge. Eine Datenschnittstelle zum Computerbildschirm oder Bildschirm ist vorzugsweise über einen Webbrowser gebildet, wobei beispielsweise ein HTTP-Protokoll eingesetzt wird. Denkbar ist auch, dass alternativ oder zusätzlich ein externer Webbrowser die gleichen Informationen abgreifen kann, die auf dem Bildschirm des Montagearbeitsplatzes dargestellt werden oder werden können. Es ist denkbar, dass das Benutzeroberflächenmodul aus mehreren separaten Prozessen gebildet ist.

In weiterer Ausgestaltung der Erfindung kann das Benutzermanagementmodul eine oder mehrere folgende Informationen speichern: eine Liste von Benutzern des Montagearbeitsplatzes, wobei zumindest ein Benutzername und/oder ein Passwort und/oder eine bestimmte Benutzergruppe für jeden Benutzer anführbar ist; eine Liste von Benutzergruppen, wobei eine jeweilige Gruppe eine oder mehrere spezifische Freigaben oder Genehmigungen hat; eine Liste von möglichen Freigaben oder Genehmigungen. Die Informationen für das Benutzermanagementmodul sind vorzugsweise intern gespeichert, womit der Zugriff auf große externe Datenbanken vermieden wird. Des Weiteren ist denkbar, dass das Benutzermanagementmodul, insbesondere über das Datentransferprotokoll eine oder mehrerer der folgenden Funktionalitäten bereitstellt: Hinzufügen und/oder Ändern und/oder Löschen eines Benutzers von der Liste für Benutzer; Hinzufügen und/oder Ändern und/oder Löschen eines Eintrags in die Liste der Benutzergruppen; Authentifizierung eines Nutzers basierend auf der Benutzerliste. Bei der Authentifizierung kann beispielsweise das Benutzeroberflächenmodul eine Einlogg-Maske zur Verfügung stellen, die über den Web-Browser zugänglich ist. Ein eingegebener Benutzername und/oder eingegebenes Passwort kann dann zum Benutzermanagementmodul beispielsweise über das Datentransferprotokoll weitergegeben werden. Das Benutzermanagementmodul kann beispielsweise dann zu einer derartigen Anfrage mit "Anfrage erfolgreich" oder "Anfrage nicht erfolgreich" beispielsweise dem Benutzeroberflächenmodul antworten. Basierend auf diesen Informationen kann dann das Benutzeroberflächenmodul zusätzliche Menüs für den Benutzer bereitstellen. Vorzugsweise kommuniziert das Benutzermanagementmodul nur mit dem Benutzeroberflächenmodul und sonst mit keinen weiteren Mikrosoftwaremodulen.

Falls ein Lightweight Directory Access Protocol (LDAP) zur Verfügung steht, ist denkbar, dass beim Benutzermanagementmodul eine Authentifizierung am Montagearbeitsplatz über einen LDAP-Server mit einem Authentifizierungsservice erfolgen kann. Benutzer können beispielsweise von einem existierenden LDAP-Server zum Benutzermanagementmodul basierend auf Gruppen gespiegelt werden. Des Weiteren ist denkbar, dass beim Benutzermanagementmodul vorgesehen ist, dass ein Benutzer seine Spracheinstellungen ändern kann. Denkbar ist auch, dass ein Benutzer sein persönliches Profil, wie beispielsweise Einstellungen des Montagearbeitsplatzes wie Tischhöhe, einstellen kann. Wie vorstehend bereits erläutert, können ein oder mehrere Nutzer bestimmten Gruppen zugeordnet werden. Einer jeweiligen Gruppe kann dann eine oder mehrere spezifische Freigaben zugeordnet werden. Eine jeweilige Freigabe kann eine oder mehrere Präferenzen für die Benutzer der Gruppe bereithalten.

In weiterer Ausgestaltung der Erfindung kann das Montagemodul eine oder mehrere der folgenden Informationen speichern: Arbeitspläne, wobei ein jeweiliger Arbeitsplan eine Liste von Arbeitsschritten aufweisen kann. Die Arbeitsschritte werden vorzugsweise in einer vorgegebenen Reihenfolge ausgeführt. Dennoch ist denkbar, dass Entscheidungen zwischen unterschiedlichen Zweigen eines Arbeitsplans vorgenommen werden können. Ein jeweiliger Arbeitsschritt kann eine oder mehrere der folgenden Informationen aufweisen: Auszuführende Tätigkeit, benötigtes Material, benötigtes Bauteil, darzustellende Mediadatei. Des Weiteren kann das Montagemodul Mediendateien, wie beispielsweise Bilder und/oder Videos, speichern, die vom Arbeitsschritt bei Bedarf abgerufen werden können. Die Informationen für das Montagemodul werden vorzugsweise intern gespeichert, womit auf große externe Datenspeicher für das Montagemodul verzichtet werden kann.

Das Montagemodul kann vorzugweise eine oder mehrere der folgenden Funktionalitäten aufweisen, die beispielsweise über das Datentransferprotokoll ausführbar sind: Hinzufügen und/oder Ändern und/oder Löschen einer Produktart, wobei eine jeweilige Produktart mit einem Montageplan verknüpft sein kann; Hinzufügen und/oder Ändern und/oder Löschen eines Arbeitsschrittes von einem Arbeitsplan, insbesondere für eine spezifische Produktart; Speichern und Löschen von Mediendateien; Erhalten oder Aufnehmen eines Arbeitsplans, beispielsweise für ein spezifisches Produkt; Erhalten und/oder Aufnehmen von benötigten Materialinformationen, beispielsweise für einen spezifischen Produktplan; Erhalten und/oder Aufnehmen einer Mediendatei, die von einem Arbeitsschritt aufrufbar ist. Im Einsatz des Montagemoduls ist denkbar, dass dieses Daten mit dem Benutzeroberflächenmodul und/oder mit dem Vorrichtungsmanagementmodul und/oder dem Auftragsverfolgungsmodul, beispielsweise über das Datentransferprotokoll, austauscht. Beispielsweise können hierdurch die Funktionalitäten des Montagemoduls bei den weiteren genannten Mikrosoftwaremodulen eingesetzt werden. Somit kann beispielsweise das Auftragsverfolgungsmodul Materialinformationen aufnehmen.

Über das Montagemodul kann ein Benutzer Arbeitspläne, beispielsweise die ihm zugeordneten Arbeitspläne, einsehen, modifizieren oder neue Arbeitspläne ausbilden. Die Arbeitspläne können dann, wie vorstehend bereits erläutert, Arbeitsschritte aufweisen, die benötigt sind, ein Produkt über den Montagearbeitsplatz zu montieren. Denkbar ist auch, dass über das Montagemodul ein Nutzer eine Demo-Produktion für einen oder mehrere Produktmontageabläufe erhalten kann, um den Montageablauf zu testen und zu optimieren. Beispielsweise kann ein Nutzer die Produktion oder Montage derart sehen, wie sie ein Monteur ausführen oder sehen würde. Es ist denkbar, dass ein Nutzer über das Montagemodul Hinweise für eine Optimierung seines Montagearbeitsplatzes und/oder über seine Montageverfahren erhält.

Die Arbeitspläne können schließlich durch den Monteur durchlaufen werden, was ebenfalls durch diesen Service ermöglicht wird. Hierbei wird dann die Sensorik über das Schnittstellenmodul 82 angesprochen und Anweisungen und Systemreaktionen über die GUI ausgegeben.

Bei einer bevorzugten Ausgestaltung der Erfindung kann das Auftragsverfolgungsmodul eine oder mehrere der folgenden Information/en speichern: eine Liste von Aufträgen, wobei ein jeweiliger Auftrag beispielsweise eine Produktart und eine Anzahl von Produkten, die produziert werden sollen, aufweist. Die Informationen können hierbei vorzugsweise intern gespeichert werden, womit auf große externe Datenbanken verzichtet werden kann. Vorzugsweise weist das Auftragsverfolgungsmodul eine oder mehrerer der folgenden Funktionalitäten auf, die beispielsweise über das Datentransferprotokoll ausgeführt werden können: Hinzufügen und/oder Ändern und/oder Löschen eines Auftrags von der Auftragsliste; einen Auftrag einem Montagearbeitsplatz zuordnen, falls mehrere Montagearbeitsplätze vorgesehen sind; einen Status eines, beispielsweise zugeordneten, Auftrags aktualisieren, beispielsweise dahingehend, dass dargestellt werden kann, wie viel Produkte produziert wurden. Alternativ oder zusätzlich kann vorgesehen sein, dass mit dem Auftragsverfolgungsmodul einen Zuordnung von Aufträgen an Montagearbeitsplätze erfolgt, so dass nur dort die Auträge angezeigt und durchgeführt werden können.

In weiterer Ausgestaltung der Erfindung ist denkbar, dass beim Auftragsverfolgungsmodul möglich ist, einen oder mehrere Aufträge manuell, beispielsweise über ein Manufacturing Execution System (MES) oder Enterprise Resource Planning (ERP) zu importieren. Dies kann beispielsweise über eine standardisierte XML-Datei erfolgen. Denkbar ist auch, dass MES oder ERP mit einer Schnittstelle, insbesondere des Auftragsverfolgungsmoduls, zu verbinden, wobei dieses dann automatisch Aufträge und/oder andere Informationen zum Auftragsverfolgungsmodul führen oder hochladen kann. Bei dem MES oder Produktionsleitsystem handelt es sich beispielsweise um eine prozessnah operierende Ebene eines mehrschichtigen Fertigungsmanagementsystems. Des Weiteren kann vorgesehen sein, dass das Auftragsverfolgungsmodul prüft, ob die erforderlichen Materialen und/oder Geräte zur Ausführung des Auftrags bereitstehen. Es kann beispielsweise auch vorgesehen sein, dass ein Status und/oder ein Fortschritt eines oder mehrerer Aufträge und/oder eines oder mehrerer Produkte überwacht wird. Mit dem Auftragsverfolgungsmodul kann auch, wie vorstehend bereits erläutert, beispielsweise manuell ein Auftrag einem bestimmten Montagearbeitsplatz zugeordnet oder von einem bestimmten Montagearbeitsplatz abgezogen werden. Vorzugsweise kann das Auftragsverfolgungsmodul einen geeigneten Montagearbeitsplatz für einen Auftrag selbstständig identifizieren. Des Weiteren ist denkbar, dass das Auftragsverfolgungsmodul beim Vorrichtungsmanagementmodul nachfragt, um einen geeigneten Montagearbeitsplatz für einen Auftrag zu finden.

In weiterer Ausgestaltung der Erfindung kann vorgesehen sein, dass das Datenmodul oder Daten- und Prüfungs-Protokoll-Modul oder Data and Audit Log Service eine oder mehrerer der Informationen speichert. Das Datenmodul erfasst vorzugsweise Prozessdaten, bereitet diese auf und kann Auswertungen durchführen.

In weiterer Ausgestaltung der Erfindung ist denkbar, dass das Datenmodul Daten oder Messgrößen von einem Teil der Mikrosoftwaremodule oder aller Mikrosoftwaremodule erhält. Des Weiteren kann vorgesehen sein, dass das Datenmodul Informationen hinsichtlich der Montage eines jeweiligen Produkts nach dessen Fertigstellung erhält, so dass diese abgerufen und analysiert werden können. Denkbar ist auch mit dem Arbeitsmodul eine Übersicht über den Status des Montagearbeitsplatzes zu erhalten oder, falls mehrere Montagearbeitsplätze vorgesehen sind, eine Übersicht über alle Montagearbeitsplätze. Beispielsweise kann hierbei eine Übersicht über den Fortschritt der Montage, über die vorgesehenen Aufträge und/oder über erledigte Aufträge vorgesehen sein. Denkbar ist auch den Zustand des Montagearbeitsplatzes zu erfassen, um beispielsweise festzustellen, ob dieser gewartet werden muss. Die Übersicht kann beispielsweise mit einer bestimmten Aktualisierungsrate, beispielsweise wie alle zehn Minuten, ausgeführt werden und/oder sie wird beispielsweise ausgeführt nachdem ein Produkt fertig montiert ist. Beispielsweise können Benutzer über das Datenmodul Qualitätsinformationen des Montageprozesses erfassen und/oder überprüfen, beispielsweise wenn dieser fertig gestellt ist. So kann beispielsweise die Qualität eines Schraubprozesses festgestellt werden. Des Weiteren ist denkbar, dass das Datenmodul Messdaten von zumindest einem Teil oder aller Mikrosoftwaremodulen speichert. Es kann auch Ablaufdaten eines oder mehrerer Montagearbeitsplätze erfassen. Außerdem können Daten definiert werden, die erfasst werden sollen. Vorzugsweise werden Fortschritts- und Prozessdaten eines oder mehrerer Montagearbeitsplätze vom Datenmodul geholt, insbesondere wenn ein Produkt fertig montiert ist. Beispielsweise ist auch denkbar, dass das Datenmodul vom Benutzermanagementmodul eine oder mehrere der folgenden Informationen erhält: wie viele Nutzer waren oder sind eingeloggt; wie viele Nutzer konnten sich nicht einloggen; wie viele Nutzer haben sich erfolgreich eingeloggt. Einloggdaten eines Montagearbeitsplatzes oder eines jeweiligen Montagearbeitsplatzes können, beispielsweise über ein Sicherheitsprotokoll, zum Datenmodul geführt werden.

Bei der bevorzugten Ausgestaltung der Erfindung kann vorgesehen sein, dass das Lizenzvalidierungsmodul eine oder mehrere der folgenden Funktionalitäten, insbesondere über das Datentransferprotokoll bereitstellt: Hochladen einer Lizenzdatei; Prüfen ob die Lizenzdatei gültig ist, insbesondere für eine spezifische Funktionalität, die vom Montagearbeitsplatz ausführbar ist. Denkbar ist auch, dass das Lizenzvalidierungsmodul vor einem Ablauf einer Lizenz warnt und beispielsweise einen Kontakt hierfür zur Verfügung stellt.

Mit Vorteil kann das Aktualisierungsmodul einen Programmcode zumindest eines Teils der Mikrosoftwaremodule oder aller Mikrosoftwaremodule aktualisieren oder ersetzen. Mit anderen Worten kann das Aktualisierungsmodul Softwareupdates und/oder Lizenzupdates liefern. Es können beispielsweise Softwareupdates für die jeweiligen Module verteilt und beispielsweise auch installiert werden. Lizenzupdates können beispielsweiseüber das Lizenzvalidierungsmodul lokal ausgewertet werden. Des Weiteren ist denkbar, dass das Aktualisierungsmodul zumindest einen Teil der Mikrosoftwaremodule oder alle Mikrosoftwaremodule, insbesondere nach der Aktualisierung, neu starten kann, beispielsweise basierend auf dem neuen Programmcode. Hierbei ist denkbar, dass das Neustarten mit dem Programmcode derart erfolgt, dass die vorliegenden Daten des jeweiligen Mikrosoftwaremoduls erhalten und eingebunden werden. Ein Datenaustausch erfolgt vorzugsweise über das Datentransferprotokoll. Denkbar ist auch, dass das Aktualisierungsmodul für eine Mehrzahl von Montagearbeitsplätzen vorgesehen ist, womit auf einfache Weise zentral eine Aktualisierung erfolgen kann. Hierdurch ist mit Vorteil auch ein Überblick über alle Lizenzen, beispielsweise in der Datenbank des Aktualisierungsmoduls ermöglicht. Somit kann überwacht werden welcher Montagearbeitsplatz welche Lizenzen hat und wie lange diese Lizenzen gültig sind. Datenkonversionen bei einem Update erfolgen vorteilhafterweise automatisch. Die Lizenzen eines Montagearbeitsplatzes oder aller Montagearbeitsplätze können in der Datenbank des Aktualisierungsmoduls gespeichert sein. Es kann auch ermöglicht sein nach abgelaufenen Lizenzen zu suchen. Des Weiteren kann das Aktualisierungsmodul eine Warnung ausgeben, wenn eine Lizenz abläuft. Mit dem Aktualisierungsmodul können auch Lizenzen upgedatet und erneuert werden.

Mit Vorteil kann vorgesehen sein, dass das Vorrichtungsmanagementmodul eine oder mehrere der folgenden Funktionen aufweist: Konfigurieren, Lesen, Schreiben und/oder Löschen einer individuellen Konfiguration für einen oder mehrere Montagearbeitsplätze. Als individuelle Konfiguration kann die Ausstattung mit Werkzeugen und/oder Geräten, Material und Anzahl von Materialpositionen (z. B. Schienen) oder Materialbehältern angesehen werden. Es ist denkbar, dass das Vorrichtungsmanagementmodul Informationen über Gerätekonfiguration eines oder mehrerer Montagearbeitsplätze aufweist. Des Weiteren ist denkbar, dass das Vorrichtungsmanagementmodul Informationen über Materialien, Werkzeuge, Geräte und/oder Ausstattung einer oder mehrerer Montagearbeitsplätze aufweist. Beispielsweise kann das Vorrichtungsmanagementmodul eine Vorkonfiguration haben, die beispielsweise von einem Administrator vorgegeben werden kann. Denkbar ist auch, dass eine Selbstregistrierung von Montagearbeitsplätzen beim Vorrichtungsmanagementmodul vorgesehen sein kann, beispielsweise über eine IP-Adresse. Des Weiteren kann vorgesehen sein, dass das Vorrichtungsmanagementmodul eine oder mehrere der folgenden Informationen speichert und/oder verarbeitet, wobei die Informationen insbesondere bezüglich der Gerätschaften des spezifischen Montagearbeitsplatzes vorgesehen sind: Art und Anzahl von Materialbehältern, die am Montagearbeitsplatz zur Verfügung stehen; Art und Anzahl von Materialien, die in einer oder mehreren Materialboxen vorgesehen sind; Ausgestaltung einer Projektionsfläche eines Projektors am Montagearbeitsplatz; Informationen über eine Ausgestaltung eines Erfassungsbereichs für eine Hand-Verfolgung; Geräte und/oder Hardware, die am Montagearbeitsplatz vorgesehen ist/sind; Art der Informationen, die über das Lesegerät einlesbar sind. Es ist denkbar, dass das Datenmodul Funktionalitäten bereitstellen kann, um diese Informationen abzuändern und/oder zu erhalten, wobei dies über das Datentransferprotokoll erfolgen kann. Das Datenmodul tauscht vorzugsweise Daten mit dem Schnittstellenmodul, insbesondere über das Datentransferprotokoll aus, insbesondere um Informationen bezüglich der Geräte des Montagearbeitsplatzes zu erhalten.

In weiterer Ausgestaltung der Erfindung ist denkbar, dass das Benutzeroberflächenmodul nur Menüs anzeigt oder frei gibt, für die eine gültige Lizenz im Lizenzvalidierungsmodul vorgesehen ist. Eine Prüfung der Lizenzdatei erfolgt beispielsweise basierend auf asymmetrischen Verschlüsselungsschemata, wie beispielsweise auf einer RSA Encryption. Hierbei kann ein korrespondierender öffentlicher oder privater Schlüssel beim Lizenzvalidierungsmodul hinterlegt sein. Vorzugsweise ist der private Schlüssel allein bei der Stelle hinterlegt, welche die Lizenzdatei erstellt, wobei für die Prüfung der Lizenz allein der öffentliche Schlüssel benötigt wird. Hierbei ist anzumerken, dass bei einer asymmetrischen Verschlüsselung der öffentliche Schlüssel sehr einfach aus dem privaten Schlüssel berechnet werden kann, wobei die umgekehrte Berechnung praktisch nicht durchführbar ist.

Erfindungsgemäß ist ein Montagearbeitsplatz mit einer Steuersoftware gemäß einem oder mehrerer der vorhergehenden Aspekte vorgesehen. Die Mikrosoftwaremodule können auf einer gemeinsamen elektronischen Datenverarbeitungsanlage (EDV-Anlage) ausgeführt sein. Denkbar ist auch die Mikrosoftwaremodule jeweils auf einer EDV-Anlage auszuführen. Denkbar ist des Weiteren, dass Gruppen von Mikrosoftwaremodulen vorgesehen sind, die jeweils auf einer EDV-Anlage ausgeführt sind. Der Montagearbeitsplatz hat für eine Montage zumindest ein, beispielsweise elektronisches, Gerät und/oder zumindest ein Werkzeug. Als Gerät kann beispielsweise eine Ausgabevorrichtung für Bildinformationen, wie beispielsweise ein Bildschirm und/oder ein Projektor, vorgesehen sein.

Ein derartiger Montagearbeitsplatz kann äußerst effektiv und einfach eingesetzt und überwacht werden.

In weiterer Ausgestaltung der Erfindung ist denkbar, dass der Montagearbeitsplatz eine EDV-Anlage hat. Alternativ oder zusätzlich ist vorstellbar, dass der Montagearbeitsplatz mit einer, beispielsweise externen, EDV-Anlage, beispielsweise kabellos oder über Kabel, verbunden ist. Vorzugsweise hat der Montagearbeitsplatz sein eigenes Benutzeroberflächenmodul. Des Weiteren kann alternativ oder zusätzlich vorgesehen sein, dass der Montagearbeitsplatz sein eigenes Schnittstellenmodul hat. Außerdem kann vorgesehen sein, dass der Montagearbeitsplatz sein eigenes Lizenzvalidierungsmodul hat. Ist ein Benutzeroberflächenmodul und/oder ein Schnittstellenmodul und/oder ein Lizenzvalidierungsmodul bei einem Montagearbeitsplatz vorgesehen, so können eine oder mehrere dieser Module beispielsweise über HTTPS, TLV 1.3 Protokoll mit Basisauthentifizierungsschutz vorgesehen sein. Die weiteren Module sind dann beispielsweise "hardcoded", um einen Zugriff darauf zu erschweren. "Hardcoded" kann beispielsweise bedeuten, dass Konfigurationsdaten direkt in den Quellcode des jeweiligen Mikrosoftwaremoduls eingebettet werden.

Erfindungsgemäß ist eine Anordnung mit einer Mehrzahl von Montagearbeitsplätzen gemäß einem oder mehrerer der vorhergehenden Aspekte vorgesehen.

Vorzugsweise weisen mehrere Montagearbeitsplätze vorrichtungstechnisch einfach ein gemeinsames Benutzermanagementmodul auf. Des Weiteren ist denkbar, dass alternativ oder zusätzlich mehrere Montagearbeitsplätze vorrichtungstechnisch einfach ein gemeinsames Montagemodul haben, insbesondere wenn sie für verwandte Produkte eingesetzt sind. Außerdem kann alternativ oder zusätzlich vorgesehen sein, dass mehrere Montagearbeitsplätze ein gemeinsames Auftragsverfolgungsmodul und/oder Vorrichtungsmanagementmodul haben und/oder sich einen Teil der anderen Module oder beliebige andere Module teilen.

Die Services bzw. Module können auf dem Montagearbeitsplatz laufen, oder sind gemäß den Wünschen des Betreibers wie folgt verteilt: zumindest ein Teil der Module oder alle Module sind lokal beim Montagearbeitsplatz oder bei mehrere Montagearbeitsplätzen der Anordnung vorgesehen, oder weltweit verteilt, oder auf einem einzigen Server im Intranet oder Internet.

Erfindungsgemäß ist ein computerlesbares Medium vorgesehen, auf dem die Steuersoftware gemäß einem oder mehrerer der vorhergehenden Aspekte gespeichert ist. Denkbar ist, dass ein jeweiliges Mikrosoftwaremodul ein jeweiliges computerlesbares Medium aufweist. Des Weiteren ist denkbar, dass Gruppen von Mikrosoftwaremodulen vorgesehen sind, wobei die jeweilige Gruppe auf einem computerlesbaren Medium gespeichert ist.

### Kurze Beschreibung der Zeichnungen

Bevorzugte Ausführungsbeispiele der Erfindung werden im Folgenden anhand schematischer Zeichnungen näher erläutert. Es zeigen:
Figur 1 in einer perspektivischen Darstellung einen Montagearbeitsplatz gemäß einem Ausführungsbeispiel,
Figur 2 schematisch eine Steuersoftware für einen Montagearbeitsplatz gemäß einem Ausführungsbeispiel,
Figur 3 schematisch eine Benutzeroberfläche eines Benutzermanagementmoduls der Steuersoftware,
Figur 4 in einer schematischen Darstellung eine Ausgestaltung eines Nutzeroberflächenmoduls der Steuersoftware,
Figur 5 in einer schematischen Darstellung eine Lizenzverschlüsselung für die Steuersoftware und
Figur 6 in einer weiteren schematischen Darstellung die Steuersoftware gemäß dem Ausführungsbeispiel.

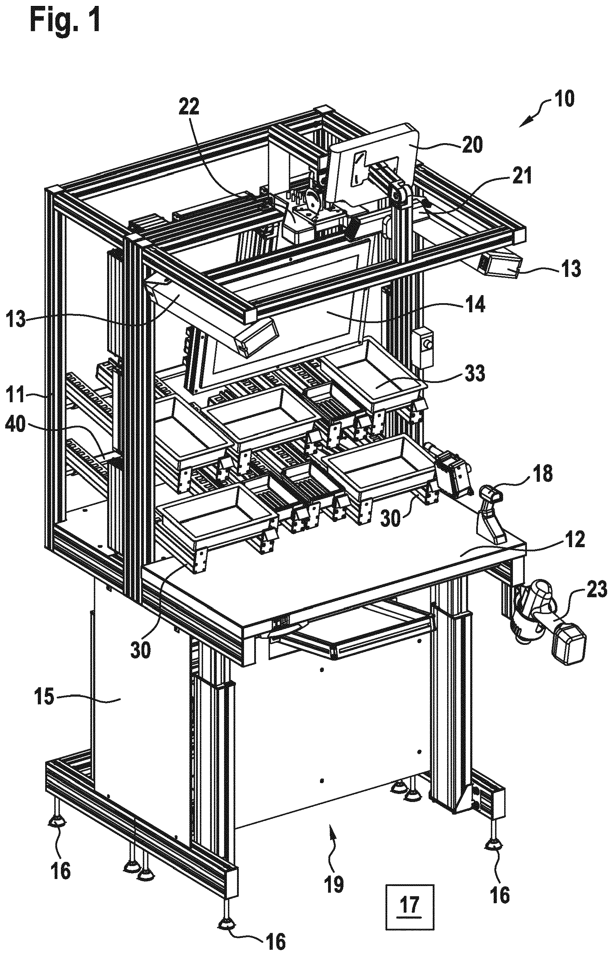

Figur 1 zeigt eine perspektivische Darstellung eines erfindungsgemäßen Montagearbeitsplatzes 10. Auf diesem sollen im Rahmen einer Serienfertigung Baugruppen aus Einzelteilen zusammengebaut werden, und zwar von einem Werker per Hand. Der Montagearbeitsplatz 10 ist aufgrund seiner einfachen Umrüstbarkeit aber auch für die Einzelanfertigung von Baugruppen verwendbar. Die Einzelteile werden in Materialbehältern 33 bereitgestellt, welche in Behälteraufnahmevorrichtungen 30 aufgenommen sind. Diese sind auf Halteprofilen 40 derart befestigt, dass ihre Position und/oder ihre Breite einstellbar sind, so dass eine in ergonomischer Hinsicht optimale Anordnung der Materialbehälter 33 gewählt werden kann. Die Halteprofile 40 sind wiederum an einem Gestell 11 befestigt, welches vorliegend aus Aluminium-Strangpressprofilen zusammengesetzt ist. An dem Gestell 11 ist außerdem eine Arbeitsfläche 12 angeordnet, die vorliegend von einer ebenen Platte mit konstanter Dicke gebildet wird. Auf der Arbeitsfläche 12 wird die o.g. Baugruppe zusammengesetzt. Auf der Arbeitsfläche 12 können Hilfsvorrichtungen angeordnet sein, in welcher die Baugruppe aufgenommen ist. Die Höhenlage der Arbeitsfläche 12 ist verstellbar. Das Gestell 12 ist mit mehreren höhenverstellbaren Stellfüßen 16 versehen, so dass es auf einem vorzugsweise horizontalen Untergrund aufgestellt werden kann.

Oberhalb der Arbeitsfläche 12 ist ein Bildschirm 14 angeordnet, welcher an eine Steuervorrichtung 17 angeschlossen ist. Bei der (grobschematisch dargestellten) Steuervorrichtung 17 kann es sich um eine einzige Vorrichtung oder mehrere miteinander vernetzte Teilvorrichtungen handeln. Auf dem Bildschirm 14 werden beispielsweise die Arbeitsschritte angezeigt, welche der Werker ausführen soll. Weiter ist oberhalb der Arbeitsfläche 12 eine Bildprojektionsvorrichtung 20 angeordnet, welche vorzugsweise digital ansteuerbar ist, wobei sie beispielsweise nach dem LCD-, nach dem DLP- oder nach dem Laser-Prinzip arbeitet. Als Lichtquelle kommen vorzugsweise stromsparende und langlebige LEDs zum Einsatz. Die Bildprojektionsvorrichtung 20 ist ebenfalls an die Steuervorrichtung 17 angeschlossen. Mit der Bildprojektionsvorrichtung 20 wird auf die Materialbehälter 33, aus denen im Rahmen des anstehenden Montagschritts ein Einzelteil zu entnehmen ist, ein Bild projiziert. Die Behälteraufnahmevorrichtungen 30 sind hierfür jeweils mit einer Projektionsfläche versehen. Das genannte Bild kann eine Zahl
enthalten, welche die Anzahl der zu entnehmenden Teile angibt. Es kann beispielsweise einen grünen Hintergrund aufweisen, der dem Werker signalisiert, dass in diesen Materialbehälter 33 zu greifen ist. Der farbliche Hintergrund kann pulsierend zwischen "voller Intensität" und "aus" ausgeführt sein, sodass die Aufmerksamkeit des Werkers verstärkt auf die richtige Position gelenkt wird. Auf die Projektionsflächen der Materialbehälter 33 aus denen kein Teil zu entnehmen ist, kann beispielsweise ein Bild mit einem roten Hintergrund projiziert werden. Je nach Anzahl und Anordnungen der Behälteraufnahmevorrichtungen 30 sind mehrere Bildprojektionsvorrichtungen 20 erforderlich, um alle Projektionsflächen auszuleuchten.

Das Gestell 11 ist mit Leuchten 13 versehen, mit welchen die Arbeitsfläche 12 hell ausgeleuchtet werden kann, so dass der Werker ermüdungsfrei arbeiten kann. Die Bildprojektionsvorrichtung 20 kann in diesem Zusammenhang auch dazu genutzt werden, einzelne Bereiche des Arbeitsplatzes heller auszuleuchten, beispielsweise den Bereich in dem die zu montierende Baugruppe angeordnet ist. Weiter kann die Bildprojektionsvorrichtung 20 dazu genutzt werden, die Stelle der zu montierenden Baugruppe anzuleuchten, an der das nächste Einzelteil eingebaut werden soll. Es ist auch denkbar, dass die Bildprojektionsvorrichtung 20 die Leuchten 13 vollständig ersetzt.

Die Bildprojektionsvorrichtung 20 hat in ihrem Inneren typischerweise eine einzige Bildvorlage, welche projiziert wird und welche beispielsweise von eine DLP- oder einem LCD-Chip gebildet wird. Diese eine Bildvorlage enthält in ggf. verzerrter Form alle Bilder, welche auf die Projektionsflächen projiziert werden sollen. Zur Berechnung der Bildvorlage ist es notwendig, die Anordnung der Projektionsflächen im Raum zu kennen.

Hierfür sind die Behälteraufnahmevorrichtungen 30 jeweils mit einem ersten Datenträger versehen, wobei die Materialbehälter jeweils mit einem zweiten Datenträger versehen sind. Bei dem ersten und/oder dem zweiten Datenträger kann es sich beispielsweise um einen Barcode, um einen QR-Code, um ein RFID-Tag oder um ein NFC-Tag handeln. Der Montagearbeitsplatz 10 umfasst zumindest eine Lesevorrichtungen 18 mit welcher die ersten und die zweiten Datenträger auslesbar sind. Die Lesevorrichtung 18 ist drahtgebunden oder drahtlos an die Steuervorrichtung 17 anschließbar bzw. angeschlossen. Der erste Datenträger enthält im einfachsten Fall eine eindeutige erste Kennnummer für die jeweils zugeordnete Behälteraufnahmevorrichtung 30. Der zweite Datenträger enthält im einfachsten Fall eine eindeutige zweite Kennnummer des in dem zugeordneten Materialbehälter aufgenommenen Teiletyps. Vorzugsweise ist in einem Materialbehälter 33 nur ein einziger Typ von Einzelteilen aufgenommen. Weiter enthält der zweite Datenträger im genannten einfachsten Fall eine eindeutige zweite Kennnummer des Bautyps des zugeordneten Materialbehälters 33. Hierbei ist anzumerken, dass für unterschiedliche große Einzelteile typischerweise unterschiedlich große Materialbehälter 33 verwendet werden, wobei innerhalb einer Fabrik nur eine begrenzte Anzahl an Typen von Materialbehältern 33 Verwendung finden. Die Behälteraufnahmevorrichtungen 30 sind vorzugsweise verstellbar ausbildet, so dass sie an unterschiedliche Typen, insbesondere an unterschiedliche Baugrößen, von Materialbehältern 33 anpassbar sind. Eine entsprechende Verstellung hat Einfluss auf den Ort der Projektionsfläche und auf den Ort an dem der Werker typischerweise in den
Materialbehälter 33 greift.

Oberhalb der Arbeitsfläche 12 ist eine erste und gewünschtenfalls eine zweite Positionserkennungsvorrichtung 21, 22 angeordnet. Mit diesen soll einerseits die räumliche Lage einer oder beider Hände des Werkers erfasst werden. Im einfachsten Fall wird jeweils nur der Ort eines Bezugspunkts der jeweiligen Hand erfasst. Es ist aber auch denkbar, die Drehlage der betreffenden Hand zu erfassen. Weiter soll mit der zweiten Positionserkennungsvorrichtung 22 die Position eines Werkzeuges 23, insbesondere eines elektrisch angetriebenen Handschraubers, ermittelt werden.

Anzumerken ist, dass vorzugsweise alle Behälteraufnahmevorrichtungen 30 parallel zu einer vertikalen Bezugsebene 15 ausgerichtet sind. Die Bezugsebene 15 ist insbesondere parallel zur Richtung der Schwerkraft ausgerichtet. Typischerweise fällt sie wie in Fig. 1 dargestellt mit einer Seitenwand des Gestells 11 zusammen. Durch die genannte Ausrichtung der Behälteraufnahmevorrichtungen 30 ergeben sich für den Werker ergonomisch günstige Greifbewegungen, wenn er in einen Materialbehälter greift.

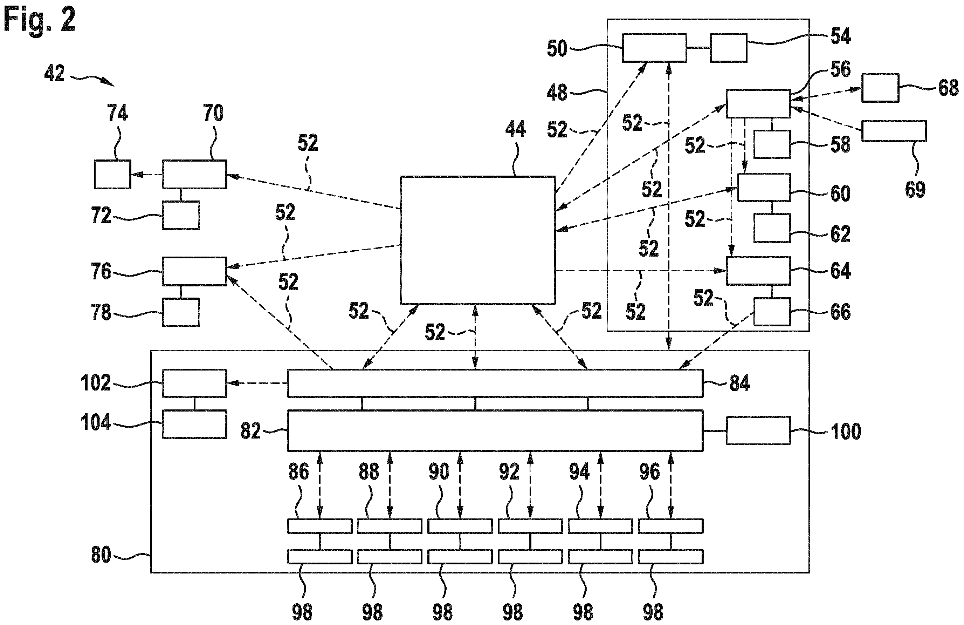

Gemäß Figur 2 ist eine Steuersoftware 42 gezeigt. Diese hat eine Vielzahl von Mikrosoftwaremodulen oder Mikroservices. In der Darstellung gemäß Figur 2 ist zentral ein Benutzeroberflächenmodul 44 vorgesehen, das mit allen weiteren Mikrosoftwaremodulen kommuniziert. Das Benutzeroberflächenmodul 44 kann eine Bedienoberfläche auf dem Bildschirm 14, siehe Figur 1, ausgeben. Über die Bedienoberfläche kann dann auf alle weiteren Mikrosoftwaremodule zugegriffen werden. Das Benutzeroberflächenmodul 44 weist des Weiteren seine eigene Datenbank auf.

Die Steuersoftware 42 hat des Weiteren Mikrosoftwaremodule, die ein Datenmanagement 48 für den Montagearbeitsplatz 10 bereitstellen. Hierbei ist ein Datenmodul 50 vorgesehen. Dieses kann mit dem Benutzeroberflächenmodul 44 über ein Datentransferprotokoll 52 kommunizieren. Das Datenmodul 50 weist seine eigene Datenbank 54 auf. Des Weiteren ist beim Datenmanagement 48 ein Auftragsverfolgungsmodul 56 vorgesehen. Dieses kommuniziert ebenfalls mit dem Benutzeroberflächenmodul über das Datentransferprotokoll 52. Des Weiteren weist es seine eigene Datenbank 58 auf. Des Weiteren kommuniziert es über das Datentransferprotokoll 52 mit einem Montagemodul 60. Dieses weist ebenfalls seine eigene Datenbank 62 auf. Außerdem ist das Montagemodul 60 Teil des Datenmanagements 48. Das Montagemodul 60 kommuniziert dann mit dem Benutzeroberflächenmodul 44 über das Datentransferprotokoll 52. Das Auftragsverfolgungsmodul 56 kommuniziert des Weiteren mit einem Vorrichtungsmanagementmodul 64 über das Datentransferprotokoll 52. Das Vorrichtungsmanagementmodul 64 ist dabei Teil des Datenmanagement 48. Es ist ebenfalls mit einer eigenen Datenbank 66 verbunden. Das Vorrichtungsmanagementmodul 64 kann des Weiteren über das Datentransferprotokoll 52 mit dem Benutzeroberflächenmodul 44 kommunizieren. Das Auftragsverfolgungsmodul 56 ist des Weiteren mit einem MES 68 verbunden. Außerdem können XML-Dateien 69 dem Auftragsverfolgungsmodul 56 zugeführt werden.

Das Benutzeroberflächenmodul 44 ist des Weiteren über das Datentransferprotokoll 52 mit einem Benutzermanagementmodul 70 verbunden. Dieses weist seine eigene Datenbank 72 aus. Es ist außerdem mit einem LDAP-Server 74 verbindbar.

Des Weiteren ist das Benutzeroberflächenmodul 44 über das Datentransferprotokoll 52 mit einem Aktualisierungsmodul 76 verbunden, das ebenfalls seine eigene Datenbank 78 hat.

Gemäß Figur 2 weist die Steuersoftware 42 Mikrosoftwaremodule auf, die auf einer lokalen EDV-Anlage des Montagearbeitsplatzes 10 aus Figur 1 vorgesehen sind, was mit dem Bezugszeichen 80 gekennzeichnet ist. Bei der lokalen EDV-Anlage 80 ist ein Schnittstellenmodul 82 vorgesehen. Dieses ist über ein REST-Interface 84 und dem Datentransferprotokoll 52 mit dem Benutzeroberflächenmodul 44 verbunden. Das Schnittstellenmodul 52 ist des Weiteren mit Geräten und/oder Werkzeugen des Montagearbeitsplatzes 10 aus Figur 1 verbunden. So kann es beispielsweise mit einem Elektroschrauber 86, einem Projektor 88, einer Kamera und/oder Tiefenkamera 90, einem Lesegerät 92 für Barcode, einem Lesegerät für einen RFID 94 und mit einem Modbus-Protokoll 96 verbunden sein. Die Geräte 86 bis 96 weisen jeweils eigene Hardware und Treiber 98 auf. Das Schnittstellenmodul 82 kann Zugriff auf XML-Dateien 100 haben, auf denen Daten vom Benutzeroberflächenmodul 44 und von den Geräten 86 bis 96 zwischenspeicherbar sind.

Über das REST-Interface 84 ist ein Lizenzvalidierungsmodul 102 angeschlossen, das Teil der EDV-Anlage ist. Das Lizenzvalidierungsmodul 102 hat Zugriff auf eine Lizenzdatei 104. Des Weiteren kann mit dem REST-Interface 84 das Vorrichtungsmanagementmodul 64 und das Aktualisierungsmodul 76 über das Datentransferprotokoll 52 kommunizieren. Außerdem ist vorgesehen, dass das Datenmodul 50 mit der lokalen EDV-Anlage 80 über das Datentransferprotokoll 52 verbindbar ist.

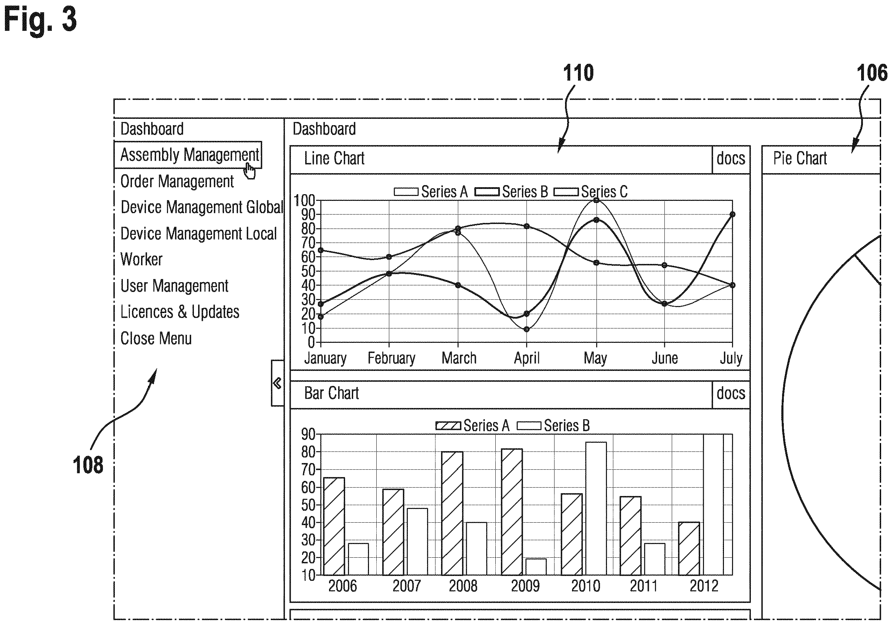

Gemäß Figur 3 ist schematisch eine Bedienoberfläche 106 gezeigt, die über das Benutzeroberflächenmodul 44, siehe Figur 2, auf dem Bildschirm 14, siehe Figur 1, ausgebbar ist. Hierbei handelt es sich um eine Web-Seite. Über ein Menü 108 kann auf die unterschiedlich vorgesehenen Mikrosoftwaremodule zugegriffen werden. Die Darstellung einer Informationstafel 110 ist dabei abhängig vom gewählten Menüpunkt. Gemäß Figur 3 ist der Menüpunkt Dashboard oder Instrumententafel gewählt, der statistische Informationen darstellt, die vom Auftragsverfolgungsmodul 56, siehe Figur 2, bereitgestellt sind.

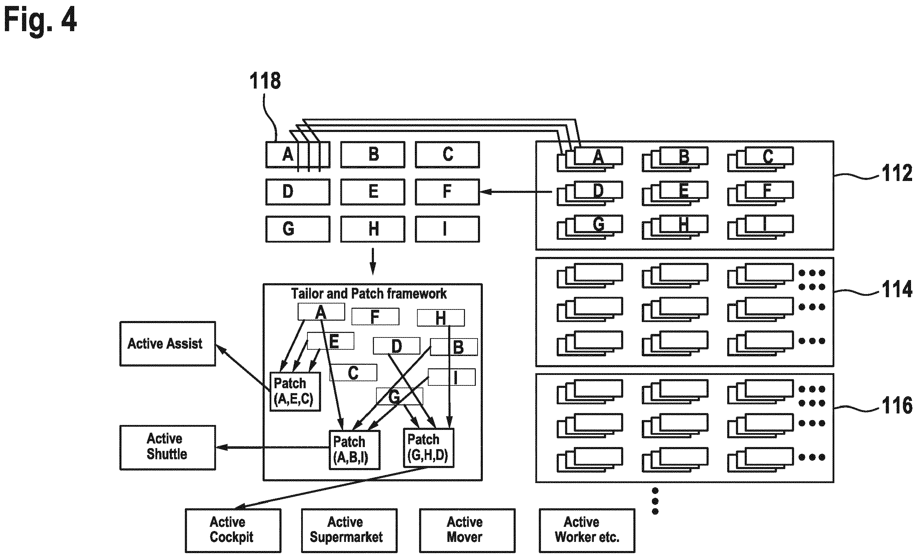

Gemäß Figur 4 ist schematisch eine Softwarearchitektur hinsichtlich des Benutzeroberflächenmoduls 44 gezeigt. Gemäß Figur 4 sind drei Backend-Server 112, 114 und 116 dargestellt. Beispielsweise hat der Backend-Server 112 mehrere Backend-Services A bis I. Ein jeweiliger Backend-Server A bis I weist dabei mehrere Serviceinstanzen auf. Der Backend-Service A hat dabei ein Frontend-User-Interface oder eine Frontend-Benutzeroberfläche 118. Diese ist in mehrere Schichten gesplittet. Jede Schicht ist dabei mit einer jeweiligen Instanz eines jeweiligen Backend-Services A bis I verbunden. Beispielsweise weist die Benutzeroberfläche 118 drei Komponenten auf, wobei jede Komponente unabhängig eingesetzt ist und mit jeder Instanz des Backend-Server A verbunden ist. Der Backend-Server A hat drei Instanzen im Einsatz, die mit den drei Komponenten der Frontend-Benutzeroberfläche 118 verbunden sind und unabhängig voneinander arbeiten. Das gleiche gilt für alle weiteren Backend-Server der Server 112 bis 116.

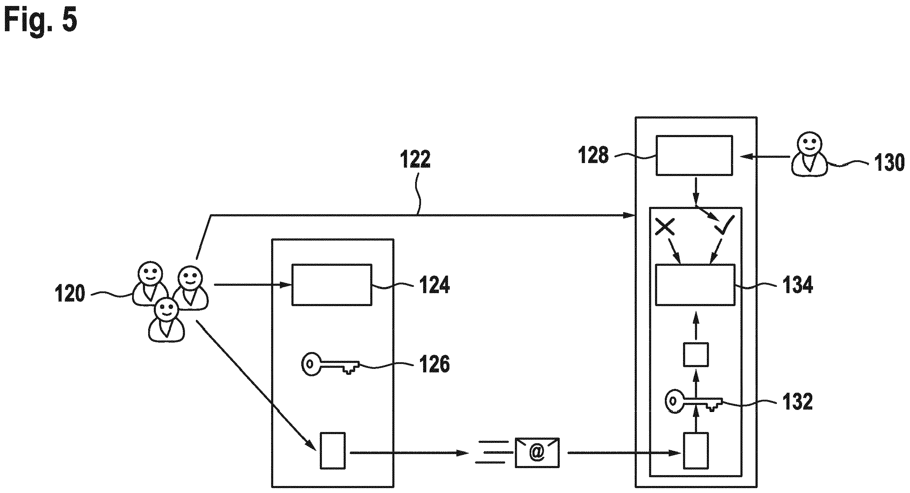

Gemäß Figur 5 ist schematisch die Lizenzverschlüsselung gezeigt. Über einen Softwarehersteller 120 wird hierbei eine Lizenz generiert. Ein öffentlicher Schlüssel wird dabei über die gelieferte Software 122 mitgeliefert. Die Softwarehersteller 120 erstellen über eine Lizenzverschlüsselung 124 dann des Weiteren einen Privatschlüssel 126, sofern noch keiner vorliegt. Jeder Verantwortliche beim Softwarehersteller, der Lizenzen erzeugen soll, kann einen privaten Schlüssel benötigen. Eine mit dem Privatschlüssel 126 verschlüsselte Lizenzdatei 128 wird dann dem Softwarenutzer 130 zugeführt. Über den öffentlichen Schlüssel 132 wird diese dann entschlüsselt. Die Software 122 kann dann vom Softwarenutzer 130 genutzt werden, wenn die Lizenz geprüft und validiert wurde, was durch das Bezugszeichen 134 dargestellt ist. Der Privatschlüssel 126 bleibt allein beim Softwarehersteller 120, wobei der öffentliche Schlüssel dem Softwarenutzer zugestellt wird. Für die Entschlüsselung der Lizenzdatei 128 bzw. für die Lizenzprüfung wird allein der öffentliche Schlüssel 132 benötigt, nicht aber der Privatschlüssel 126. Da der private Schlüssel 126 praktisch nicht aus dem öffentlichen Schlüssel 132 berechenbar ist, ist der Softwarenutzer, selbst wenn er den öffentlichen Schlüssel 132 hat, nicht in der Lage ist, den Privatschlüssel 126 zu erhalten. Hierdurch ist er weiter nicht in der Lage, Schlüsselkopien zu erstellen, was die Sicherheit erhöht.

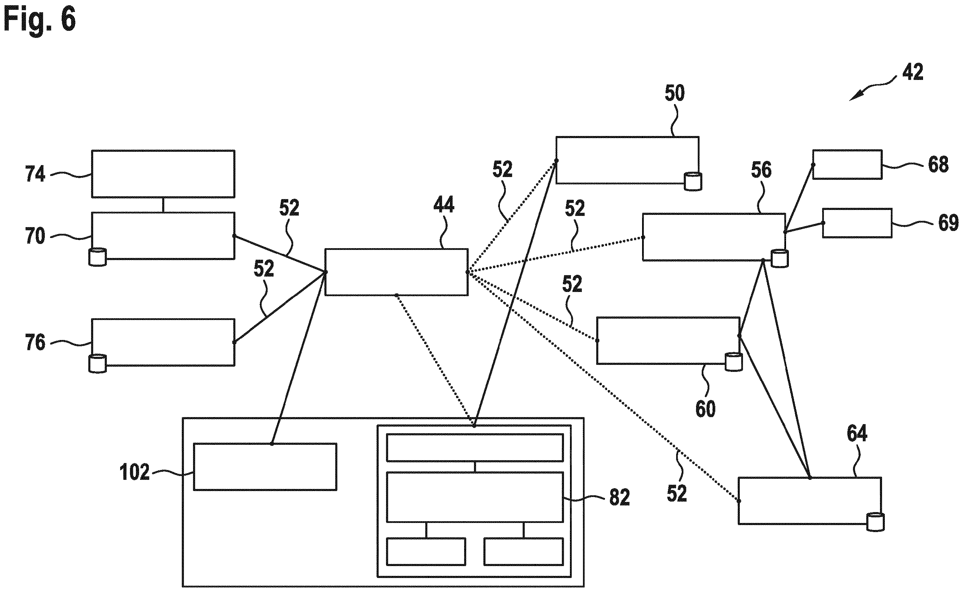

Gemäß Figur 6 ist die Steuersoftware 42 in einer weiteren Darstellung gezeigt. Das Benutzeroberflächenmodul 44 ist dabei über das Datentransferprotokoll 52 mit dem Datenmodul 50, dem Auftragsverfolgungsmodul 56, dem Montagemodul 60, dem Vorrichtungsmanagementmodul 64, dem Benutzermanagementmodul 70 und dem Aktualisierungsmodul 76 verbunden. Das Auftragsverfolgungsmodul 56 ist dabei mit dem MES 68 und dem XML-Dateien 69 verbunden. Das Benutzermanagementmodul 70 ist mit dem LDAP-Server 74 verbunden. Des Weiteren können die Module 56, 60 und 64 miteinander kommunizieren. Sowohl das Benutzeroberflächenmodul 44, als auch das Datenmodul 50 sind mit dem Schnittstellenmodul 82 verbunden. Des Weiteren ist das Benutzeroberflächenmodul 44 mit dem Lizenzvalidierungsmodul 102 verbunden.

Offenbart ist eine Steuersoftware für einen Montagearbeitsplatz. Diese hat eine Mehrzahl von Microservices. Diese übernehmen hierbei eine Vielzahl von Aufgaben des Montagearbeitsplatzes. Über ein Microservice in Form eines graphischen Benutzeroberflächenmoduls kann eine Benutzeroberfläche auf einer Ausgabevorrichtung eines Montagearbeitsplatzes und/ oder an beliebiger Stelle im Netzwerk dargestellt werden. Über die Benutzeroberfläche und das Benutzeroberflächenmodul kann zumindest auf einem Teil der weiteren Microservices zugegriffen werden.

### Bezugszeichenliste

- 10: Montagearbeitsplatz
- 11: Gestell
- 12: Arbeitsfläche
- 13: Leuchte
- 14: Bildschirm
- 15: vertikale Bezugsebene
- 16: Stellfuß
- 17: Steuervorrichtung
- 18: Lesevorrichtung
- 19: Position des Werkers
- 20: Bildprojektionsvorrichtung
- 21: erste Positionsbestimmungsvorrichtung
- 22: zweite Positionsbestimmungsvorrichtung
- 23: Werkzeug (Schrauber)
- 30: Behälteraufnahmevorrichtung
- 31: erster Datenträger
- 32: zweiter Datenträger
- 33: Materialbehälter
- 34: Referenzpunkt
- 40: Halteprofil
- 42: Steuersoftware
- 44: Benutzeroberflächenmodul
- 48: Datenmanagement
- 50: Datenmodul
- 52: Datentransferprotokoll
- 54, 58, 62, 66, 72, 78: Datenbank
- 56: Auftragsverfolgungsmodul
- 60: Montagemodul
- 64: Vorrichtungsmanagementmodul
- 68: MES
- 69: XML-Dateien
- 70: Benutzermanagementmodul
- 74: LDAP Server
- 76: Aktualisierungsmodul
- 80: lokale EDV-Anlage
- 82: Schnittstellenmodul
- 84: REST-Interface
- 86: Elektroschrauber
- 88: Projektor
- 90: Kamera
- 92: Lesegerät
- 94: Lesegerät
- 96: Modbus-Protokoll
- 98: Hardware und Treiber
- 100: XML-Dateien
- 102: Lizenzvalidierungsmodul
- 104: Lizenzdatei
- 106: Bedienoberfläche
- 108: Menü
- 110: Informationstafel
- 112, 114, 116: Backend Server
- 118: Benutzeroberfläche
- 120: Softwarehersteller
- 122: Software
- 124: Lizenzverschlüsselung
- 126: privaten Schlüssel
- 128: Lizenzdatei
- 130: Softwarenutzer
- 132: öffentlichen Schlüssel
- 134: Lizenzprüfung und -validierung

## Patentansprüche

1. Steuersoftware für einen Montagearbeitsplatz (10), die durch eine Mehrzahl von Mikrosoftwaremodulen gebildet ist, wobei diese als separate Prozesse ausgebildet sind, wobei der Montagearbeitsplatz (10) zumindest ein Gerät (13, 14, 18, 20, 21, 22, 23, 30, 33) hat, wobei als Mikrosoftwaremodul ein graphisches Benutzeroberflächenmodul (44) für eine Ausgabevorrichtung (14) vorgesehen ist, und/oder wobei als Mikrosoftwaremodul ein Schnittstellenmodul (82) vorgesehen ist, das eine Schnittstelle zwischen den zumindest einem Gerät und einem Mikrosoftwaremodul oder einem Teil der Mikrosoftwaremodule bereitstellt, und/oder wobei als Mikrosoftwaremodul ein Benutzermanagementmodul (70) vorgesehen ist, mit der Liste von Benutzern des Montagearbeitsplatzes (10) und/oder mit der eine Liste von Benutzergruppen verwaltet ist, und/oder wobei als Mikrosoftwaremodul ein Montagemodul (60) vorgesehen ist, mit dem eine Liste von Arbeitsplänen verwaltet ist, die jeweils einen oder mehrere Arbeitsschritte aufweisen und/oder mit dem eine Liste von Arbeitsschritten verwaltet ist, und/oder wobei als Mikrosoftwaremodul ein Auftragsverfolgungsmodul (56) vorgesehen ist, mit dem ein Auftrag oder eine Liste von Aufträgen verwaltet ist, und/oder wobei als Mikrosoftwaremodul ein Datenmodul (50) vorgesehen ist, und/oder wobei als Mikrosoftwaremodul ein Vorrichtungsmanagementmodul (64) vorgesehen ist, mit dem Daten bezüglich der Ausgestaltung des Montagearbeitsplatzes (10) verwaltet sind.

2. Steuersoftware nach Anspruch 1, wobei das Benutzeroberflächenmodul (44) für zumindest einen Teil der Mikrosoftwaremodule eine Benutzeroberfläche (106) darstellt.

3. Steuersoftware nach Anspruch 1 oder 2, wobei als Mikrosoftwaremodul ein Lizenzvalidierungsmodul (102) vorgesehen ist, und/oder wobei als Mikrosoftwaremodul ein Aktualisierungsmodul (76) vorgesehen ist.

4. Steuersoftware nach einem der vorhergehenden Ansprüche, wobei die Mikrosoftwaremodule mit einem einheitlichen Datentransferprotokoll (52) kommunizieren.

5. Steuersoftware nach Anspruch 4, wobei das Datentransferprotokoll (52) über ein Computernetzwerk eingesetzt oder einsetzbar ist.

6. Steuersoftware nach einem der vorhergehenden Ansprüche, wobei zumindest ein Teil der Mikrosoftwaremodule jeweils eine eigene Datenbank (54, 58, 62, 66, 72, 78) aufweisen.

7. Montagearbeitsplatz mit einer Steuersoftware gemäß einem der vorhergehenden Ansprüche, wobei dieser zumindest ein Gerät (13, 14, 18, 20, 21, 22, 23, 30, 33) hat, wobei als Gerät eine Ausgabevorrichtung (14) für Bildinformationen vorgesehen ist.

8. Montagearbeitsplatz nach Anspruch 7, wobei das Schnittstellenmodul (82) auf einer lokalen elektronischen Datenverarbeitungs-Anlage des Montagearbeitsplatzes (10) vorgesehen ist.

9. Montagearbeitsplatz nach Anspruch 7 oder 8, wobei dieser sein eigenes Benutzeroberflächenmodul (44) und/oder sein eigenes Schnittstellenmodul (82) und/oder sein eigenes Lizenzvalidierungsmodul (102) und/oder sein eigenes Datenmodul (50) aufweist.

10. Anordnung mit einer Mehrzahl von Montagearbeitsplätzen gemäß einem der Ansprüche 7 bis 9, wobei diese ein gemeinsames Benutzermanagementmodul (70) aufweisen.

11. Anordnung nach Anspruch 10, wobei mehrere Montagearbeitsplätze (10) ein gemeinsames Montagemodul (60) und/oder ein gemeinsames Auftragsverfolgungsmodul (56) aufweisen.

12. Computerlesbares Medium, auf dem die Steuersoftware (42) nach einem der Ansprüche 1 bis 6 gespeichert ist.
